# EUROPEAN PATENT SPECIFICATION

(11) **EP 4 289 805 B1**
(45) Date of publication and mention of the grant of the patent: **18.12.2024**
(21) Application number: 23155356.1
(22) Date of filing: 07.02.2023
(51) Int. Cl.: C04B 35/58, C04B 35/626, C04B 35/645, C04B 35/65

(54) **METHOD FOR MANUFACTURING A CUTTING TOOL FROM A HIGHLY REFRACTORY COMPOSITE**
VERFAHREN ZUR HERSTELLUNG EINES SCHNEIDWERKZEUGS AUS EINEM HOCHFEUERFESTEN VERBUNDWERKSTOFF
PROCÉDÉ D'OBTENTION D'UN OUTIL DE COUPE A PARTIR D'UN COMPOSITE HAUTEMENT REFRACTAIRE

(30) Priority: 06.06.2022 PL 44138322
(43) Date of publication of application: 13.12.2023
(73) Proprietor: Akademia Gorniczo-Hutnicza im. Stanislawa Staszica w Krakowie, 30-059 Krakow (PL)
(72) Inventor: KOZIE , Dawid, 31-586 Kraków (PL); P DZICH, Zbigniew, 30-619 Kraków (PL); CHLUBNY, Leszek, 31-871 Kraków (PL); NIERODA, Pawe, 30-058 Kraków (PL)
(74) Representative: Augustyniak, Magdalena Anna

(56) References cited:
- EP-A1- 4 056 540
- JP-A- H10 101 433
- ZHAO GUOLONG ET AL: "Microstructure and mechanical properties at room and elevated temperatures of reactively hot pressed TiB2-TiC-SiC composite ceramic tool materials", CERAMICS INTERNATIONAL, ELSEVIER, AMSTERDAM, NL, vol. 42, no. 4, 22 December 2015 (2015-12-22), pages 5353 - 5361, XP029388012, ISSN: 0272-8842, DOI: 10.1016/J.CERAMINT.2015.12.068
- GRIGORIEV SERGEY N. ET AL: "Processing and Characterization of Spark Plasma Sintered SiC-TiB2-TiC Powders", MATERIALS, vol. 15, no. 5, 5 March 2022 (2022-03-05), pages 1946, XP055912973, DOI: 10.3390/ma15051946
- RAJU G B ET AL: "Temperature dependent hardness and strength properties of TiB"2 with TiSi"2 sinter-aid", JOURNAL OF THE EUROPEAN CERAMIC SOCIETY, ELSEVIER, AMSTERDAM, NL, vol. 29, no. 10, 1 July 2009 (2009-07-01), pages 2119 - 2128, XP026099718, ISSN: 0955-2219, [retrieved on 20090114], DOI: 10.1016/J.JEURCERAMSOC.2008.11.018
- RZEPA SYLWIA ET AL: "The Ti- Si intermetallic phases synthesis by SHS method", 23 May 2018 (2018-05-23), pages 1699 - 1704, XP009535055, Retrieved from the Internet <URL:https://www.confer.cz/metal/2018/read/1298-the-ti-si-intermetallic-phases-synthesis-by-using-shs-method.pdf>

## Description

The subject matter of the invention is a method of manufacturing a cutting tool from a highly refractory composite obtained from boron carbide and an intermetallic compound of the Ti-Si system, for use in the tool industry.

From the Polish description of the application of the invention PL437232 is known a method of obtaining a highly refractory composite from boron carbide and an intermetallic compound of the Ti-Si system, relaying on mixing starting powders in the form of boron carbide B₄C, the intermetallic compound of the Ti-Si system and carbon C in an alcohol environment, forming shaped pieces from the mixture of powders and subjecting them to sintering, in which titanium silicide Ti₅Si₃ and carbon C are added to the boron carbide B₄C powder, in the molar ratio B₄C:Ti₅Si₃:C of 5:2:1. Then, the whole is mixed in the isopropyl alcohol environment for 20-60 minutes and dried until the complete evaporation of the alcohol for 20-120 minutes, after which the shaped pieces are pre-formed and subjected to isostatic pressing under a pressure of 100-200 MPa. The achieved moulded pieces are subjected to the free sintering process in argon atmosphere at a temperature of 1650-1750°C, with a temperature increase of 2-10°C/minute and a holding time of 5-30 minutes at a maximum temperature, achieving the TiB₂-TiC-SiC-Ti₅Si₃ composite consisting of 70.0-75.0% of TiB₂, 0.5-2.5% of TiC, 20.0-27.5% of SiC, and 0.2-1.0% of Ti₅Si₃ by weight. The efficiency of the process is at least 99%.

It is known from the Polish description of the application of the invention PL425041A1 a ceramic composite of the group of UHTC materials with the matrix of hafnium diboride HfB₂ and a method of manufacturing thereof. The method is characterized in that the additives in the form of silicon carbide SiC and/or boron carbide B₄C in the amount from 8% by volume to 20% by volume and graphene nanoflakes having an average particle size <4 nm in the amount from 2% by volume to 4% by volume are introduced into the powder with hafnium diboride HfB₂ in the amount from 76% by volume to 92% by volume and the starting mixture is subjected to high-pressure sintering using the HPHT method under the pressure of 7.2 GPa at the temperature of 1700±50°C.

It is known from the European patent description EP2021302 B1 a method of manufacturing high-density UHTC composites in the ZrB₂-SiC-ZrC system. This method is characterized in that zirconium powders having a purity higher than 98.5% and a particle size less than 44 µm are dry mixed with boron carbide powder having a purity higher than 99.0% and a particle size less than 44 µm, and then mixed with graphite powder having a particle size ranging from 1 to 2 µm. The mixture thus achieved is subjected to the SHS synthesis, and then sintered using the Electric Current Activated Sintering (ECAS) method at temperatures ranging from 1600 to 1900°C, with a holding for 10 to 20 minutes at a maximum temperature.

It is known from the Chinese patent description CN108484171B a method of manufacturing UHTC composites from the B₄C-ZrB₂ system. This method is characterized in that composite powder is produced in the sintering process of the mixture of powders of B₄C, ZrB₂, carbon black and metallic silicon. The mixture of powders is isostatically pressed under a pressure ranging from 100 to 500 MPa, and then freely sintered at a temperature ranging from 1900 to 2300°C with a holding for 0.5 to 3 hours at a maximum temperature. ZHAO GUOLONG et A1 (Ceramics International, Vol.42, Issue 4, 2016, pp.5353-5361) describe a TiB₂-TiC-SiC ternary composite and disclose the manufacture of 2 TiB₂ - x TiC - (1-x) SiC by reactive hot pressing, namely: mixing Si : B₄C : Ti powders in a molar ratio (1-x) : 1 : (2+x), i.e. 0.5 : 1: 2.5 and 0.75 : 1 : 2.25 ; hot pressing at 1700°C under 32 MPa in vacuum, for 45 min with a heat rate of 50°C/min.

The purpose of the method according to the invention is to increase heat resistance of a cutting tool while maintaining high hardness.

The gist of the method of manufacturing a cutting tool from a highly refractory composite obtained from boron carbide and an intermetallic compound of the Ti-Si system, relaying on mixing starting powders in the form of boron carbide (B₄C), the intermetallic compound of the Ti-Si system, carbon C and boron B in the isopropyl alcohol environment, forming shaped pieces from the mixture of powders and subjecting them to sintering, relay on that the highly refractory composite contains titanium silicide TiSi or TiSi₂ as the intermetallic compound of the Ti-Si system in the molar ratio B₄C:TiSi/TiSi₂:C:B of 1:2:3:1. The obtained TiB₂-TiC-SiC-TiSi composite containing titanium silicide TiSi has 60.0-65.0% by weight of TiB₂, 20-34% by weight of TiC, 5-14% by weight of SiC and 0.9-1.0% by weight of TiSi, while the obtained TiB₂-TiC-SiC-TiSi₂ composite containing titanium silicide TiSi₂ has 65.0-70.0% by weight of TiB₂, 9.2-10% by weight of TiC, 19.9-24.1% by weight of SiC and 0.9-1.0% by weight of TiSi₂. The sintering process of the formed shaped pieces is carried out by the spark plasma sintering method SPS under the protection of argon at a temperature of 1350-1450°C, with a temperature increase of 200-300°C per minute, with a holding time of 1-5 minutes and under the pressure of 50 MPa or by the hot pressing method at a temperature of 1500-1550°C, with the temperature increase of 10°C, with the holding time of 30 minutes and under the pressure of 50 MPa.

The use of titanium silicide TiSi or TiSi₂ as the intermetallic compound of the Ti-Si system in a highly refractory composite made it possible to eliminate unreacted carbon formed as the result of the decomposition of boron carbide (B₄C) during the synthesis, while simultaneously achieving the largest possible amount of the TiB₂ phase having the highest melting point (T=3325°C) among the components of the composite and the TiC phase (T=3140°C), which improved the refractoriness of the produced composite, while simultaneously increasing its hardness. The preferable phase composition of the composite, i.e. the high content of TiB₂ and TiC phases, compared to the composites known from the state of the art and produced from boron carbide and an intermetallic compound of the Ti-Si system, allows the composite according to the invention to work at high temperatures for a longer time while maintaining preferable mechanical properties. On the other hand, the conduction of the sintering process using the spark plasma sintering method SPS under the protection of argon makes it possible to significantly lower the synthesis temperature to 1350°C, and thus reduce the costs of tools manufacturing.

The obtained shaped pieces of cutting tool obtained by the method according to the invention are characterized by high hardness as measured by the Vickers method and ranging from 25 to 40 (GPa) and can work up to a temperature of 600-800°C at the edge of cutting tool without the use of coolant in the form of water. The proposed shaped pieces can be made with different geometry of the blade shape through mechanical working, and their average density is up to 99.9%. The obtained cutting tools are characterized in that they can be regenerated from 3-5 times by using the additive of boron and carbon to the composition and re-sintering the obtained shaped pieces by using laser treatment under the protection of argon or by mechanical re-working the shaped pieces and removing damaged or deformed surfaces. Due to the high abrasion resistance of the obtained composites, the average friction factor can be determined at the level of 0.4-0.5.

### Example 1

The following powders were prepared to obtain the composite: boron carbide B₄C, titanium silicide TiSiz, carbon C in the form of P-803 technical carbon black (Tuymazy) and amorphous boron, which consisted of three phases: beta boron, boric acid and boron. Commercial boron carbide B₄C powder (Boron carbide B4C GRADE HS by Höganäs) containing the following phases: B₁₃C₂ (99%) and graphite (1%) was used. To produce the TiSi₂ powder, the process of self-developing high-temperature synthesis (SHS) was used, as described in the publication by S. Rzepa, L. Chlubny, T. Bucki, "The Ti - Si intermetallic phases synthesis by SHS method", METAL 2018-27th International Conference on Metallurgy and Materials, Conference Proceedings, 2018, p. 1699-1704, according to which the powders of Ti and Si were used in the molar ratio of 1:2. The mixture of powders was placed in a reactor with argon atmosphere under the overpressure of 1.5 atm. The SHS synthesis reaction was initiated locally by the heat released during current flow, through a graphite foil placed in the mixture of powders. The current intensity was 200 A, and the flow time was 1 minute. The produced titanium silicide TiSi₂, carbon C in the form of P-803 technical carbon black (Tuymazy) and amorphous boron were added to the boron carbide B₄C powder, in the molar ratio B₄C:TiSi₂:C:B of 1:2:3:1, and the whole mixture was then stirred in a rotary-vibrating mill in the isopropyl alcohol environment for 30 minutes, after which it was dried until the complete evaporation of the alcohol for 30 minutes. The obtained powders were preformed into disks having the diameter of 25 mm and the height of 20 mm and subjected to isostatic pressing under the pressure of 200 MPa. The achieved moulded pieces were subjected to the sintering process by the spark-plasma method SPS in argon (Ar) atmosphere under the protection of argon, at the temperature of 1450°C, with the temperature increase of 300°C per minute, with the holding time of 5 minutes and under the pressure of 50 MPa. The TiB₂-TiC-SiC-TiSi₂ composite containing titanium silicide TiSi₂, obtained by the method according to the invention, had the following phase composition: 70.0 % by weight of TiB₂, 9.2 % by weight of TiC, 19.9 % by weight of SiC, and 0.9 % by weight of TiSi₂. The thus obtained moulded pieces of the composite having the composition as above in the form of the cylinder having the diameter of 20 mm and the height of 6 mm were subjected to mechanical working.

The manufactured tool in the form of a multi-blade plate having the RNGN1204 geometry, intended for use in a cutting device, had high hardness of 40 (GPa) as measured by the Vickers method, wherein during the test it worked at the temperature of 650°C without the use of coolant in the form of water. The obtained cutting tools are characterized in that they can be regenerated by using the additive of boron and carbon to the composition and re-sintering the obtained shaped pieces, it is possible to use laser treatment under the protection of argon or by mechanical re-working the shaped pieces and removing damaged or deformed surfaces. Due to the high abrasion resistance of the obtained composites, the average friction factor can be determined at the level of 0.5. The use of intermetallics and starting products in the form of boron carbide (B₄C), boron (B) and carbon (C) confirms the occurrence of the reaction sintering during the synthesis, which makes it possible to achieve a density of the obtained composites at the level of 99.9%.

### Example 2

The following powders were prepared to obtain the composite: boron carbide B₄C, titanium silicide TiSi, carbon C in the form of P-803 technical carbon black (Tuymazy) and amorphous boron, which consisted of three phases: beta boron, boric acid and boron. Commercial boron carbide B₄C powder (Boron carbide B₄C GRADE HS by Höganäs) containing the following phases: B₁₃C₂ (99%) and graphite (1%) was used. To produce the TiSi powder, the process of self-developing high-temperature synthesis (SHS) was used, as described in the publication by S. Rzepa, L. Chlubny, T. Bucki, "The Ti - Si intermetallic phases synthesis by SHS method", METAL 2018-27th International Conference on Metallurgy and Materials, Conference Proceedings, 2018, p. 1699-1704, according to which the powders of Ti and Si were used in the molar ratio of 1:1. The mixture of powders was placed in a reactor with argon atmosphere under the overpressure of 1.5 atm. The SHS synthesis reaction was initiated locally by the heat released during current flow, through a graphite foil placed in the mixture of powders. The current intensity was 200 A, and the flow time was 1 minute. The produced titanium silicide TiSi, carbon C in the form of P-803 technical carbon black (Tuymazy) and amorphous boron were added to the boron carbide B₄C powder, in the molar ratio B₄C:TiSi:C:B of 1:2:3:1, and the whole mixture was then stirred in a rotary-vibrating mill in the isopropyl alcohol environment for 30 minutes, after which it was dried until the complete evaporation of the alcohol for 30 minutes. The obtained powders were preformed into disks having the diameter of 25 mm and the height of 20 mm and subjected to isostatic pressing under the pressure of 200 MPa. The achieved moulded pieces were subjected to the sintering process by the spark-plasma method SPS in argon (Ar) atmosphere under the protection of argon, at the temperature of 13 50°C, with the temperature increase of 300°C per minute, with the holding time of 5 minutes and under the pressure of 50 MPa. The TiB₂-TiC-SiC-TiSi composite containing titanium silicide TiSi, obtained by the method according to the invention, had the following phase composition: 60.0% by weight of TiB₂, 34% by weight of TiC, 5% by weight of SiC and 1% by weight of TiSi. The thus obtained moulded pieces of the composite having the composition as above in the form of the plate with the square base having the side of 20 mm and the height of 6 mm were subjected to mechanical working.

The manufactured tool in the form of a multi-blade plate having the RNGN1204 geometry, intended for use in a cutting device, had high hardness of 38 (GPa) as measured by the Vickers method, wherein during the test it worked at the temperature of 650°C without the use of coolant in the form of water. The obtained cutting tools are characterized in that they can be regenerated by using the additive of boron and carbon to the composition and re-sintering the obtained shaped pieces, it is possible to use laser treatment under the protection of argon or by mechanical re-working the shaped pieces and removing damaged or deformed surfaces. Due to the high abrasion resistance of the obtained composites, the average friction factor can be determined at the level of 0.5. The use of intermetallics and starting products in the form of boron carbide (B₄C), boron (B) and carbon (C) confirms the occurrence of the reaction sintering during the synthesis, which makes it possible to achieve a density of the obtained composites at the level of 99.9%.

### Example 3

The following powders were prepared to obtain the composite: boron carbide B₄C, titanium silicide TiSiz, carbon C in the form of P-803 technical carbon black (Tuymazy) and amorphous boron, which consisted of three phases: beta boron, boric acid and boron. Commercial boron carbide B₄C powder (Boron carbide B₄C GRADE HS by Höganäs) containing the following phases: B₁₃C₂ (99%) and graphite (1%) was used. To produce the TiSi₂ powder, the process of self-developing high-temperature synthesis (SHS) was used, as described in the publication by S. Rzepa, L. Chlubny, T. Bucki, "The Ti - Si intermetallic phases synthesis by SHS method", METAL 2018-27th International Conference on Metallurgy and Materials, Conference Proceedings, 2018, p. 1699-1704, according to which the powders of Ti and Si were used in the molar ratio of 1:2. The mixture of powders was placed in a reactor with argon atmosphere under the overpressure of 1.5 atm. The SHS synthesis reaction was initiated locally by the heat released during current flow, through a graphite foil placed in the mixture of powders. The current intensity was 200 A, and the flow time was 1 minute. The produced titanium silicide TiSi₂, carbon C in the form of P-803 technical carbon black (Tuymazy) and amorphous boron were added to the boron carbide B₄C powder, in the molar ratio B₄C:TiSi₂:C:B of 1:2:3:1, and the whole mixture was then stirred in a rotary-vibrating mill in the isopropyl alcohol environment for 30 minutes, after which it was dried until the complete evaporation of the alcohol for 30 minutes. The obtained powders were preformed into disks having the diameter of 25 mm and the height of 20 mm and subjected to isostatic pressing under the pressure of 200 MPa. The achieved moulded pieces were subjected to the sintering process by the hot pressing method at the temperature of 1550°C, with the temperature increase of 10°C per minute, with the holding time of 30 minutes and under the pressure of 50 MPa. The TiB₂-TiC-SiC-TiSi₂ composite containing titanium silicide TiSi₂, obtained by the method according to the invention had, the following phase composition: 65.0% by weight of TiB₂, 10% by weight of TiC, 24.1% by weight of SiC and 0.9% by weight of TiSi₂. The thus obtained moulded pieces of the composite having the composition as above in the form of the cylinder having the diameter of 20 mm and the height of 6 mm were subjected to mechanical working.

The manufactured tool in the form of a multi-blade plate having the RNGN1204 geometry, intended for use in a cutting device, had high hardness of 40 (GPa) as measured by the Vickers method, wherein during the test it worked at the temperature of 500°C without the use of coolant in the form of water. The obtained cutting tools are characterized in that they can be regenerated by using the additive of boron and carbon to the composition and re-sintering the obtained shaped pieces, it is possible to use laser treatment under the protection of argon or by mechanical re-working the shaped pieces and removing damaged or deformed surfaces. Due to the high abrasion resistance of the obtained composites, the average friction factor can be determined at the level of 0.5. The use of intermetallics and starting products in the form of boron carbide (B₄C), boron (B) and carbon (C) confirms the occurrence of the reaction sintering during the synthesis, which makes it possible to achieve a density of the obtained composites at the level of 99.9%.

### Example 4

The following powders were prepared to obtain the composite: boron carbide B₄C, titanium silicide TiSi, carbon C in the form of P-803 technical carbon black (Tuymazy) and amorphous boron, which consisted of three phases: beta boron, boric acid and boron. Commercial boron carbide B₄C powder (Boron carbide B₄C GRADE HS by Höganäs) containing the following phases: B₁₃C₂ (99%) and graphite (1%) was used. To produce the TiSi powder, the process of self-developing high-temperature synthesis (SHS) was used, as described in the publication by S. Rzepa, L. Chlubny, T. Bucki, "The Ti - Si intermetallic phases synthesis by SHS method", METAL 2018-27th International Conference on Metallurgy and Materials, Conference Proceedings, 2018, p. 1699-1704, according to which the powders of Ti and Si were used in the molar ratio of 1:1. The mixture of powders was placed in a reactor with argon atmosphere under the overpressure of 1.5 atm. The SHS synthesis reaction was initiated locally by the heat released during current flow, through a graphite foil placed in the mixture of powders. The current intensity was 200 A, and the flow time was 1 minute. The produced titanium silicide TiSi₂, carbon C in the form of P-803 technical carbon black (Tuymazy) and amorphous boron were added to the boron carbide B₄C powder, in the molar ratio B₄C:TiSi:C:B of 1:2:3:1, and the whole mixture was then stirred in a rotary-vibrating mill in the isopropyl alcohol environment for 30 minutes, after which it was dried until the complete evaporation of the alcohol for 30 minutes. The obtained powders were preformed into disks having the diameter of 25 mm and the height of 20 mm and subjected to isostatic pressing under the pressure of 200 MPa. The achieved moulded pieces were subjected to the sintering process by the hot pressing method at the temperature of 1500°C, with the temperature increase of 10°C per minute, with the holding time of 30 minutes and under the pressure of 50 MPa. The TiB₂-TiC-SiC-TiSi composite containing titanium silicide TiSi, obtained by the method according to the invention, had the following phase composition: 60.0% by weight of TiB₂, 25% by weight of TiC, 14% by weight of SiC and 1% by weight of TiSi. The thus obtained moulded pieces of the composite having the composition as above in the form of the square having the side of 20 mm and the height of 6 mm were subjected to mechanical working.

The manufactured tool in the form of a multi-blade plate having the RNGN1204 geometry, intended for use in a cutting device, had high hardness of 37 (GPa) as measured by the Vickers method, wherein during the test it worked at the temperature of 600°C without the use of coolant in the form of water. The obtained cutting tools are characterized in that they can be regenerated by using the additive of boron and carbon to the composition and re-sintering the obtained shaped pieces, it is possible to use laser treatment under the protection of argon or by mechanical re-working the shaped pieces and removing damaged or deformed surfaces. Due to the high abrasion resistance of the obtained composites, the average friction factor can be determined at the level of 0.5. The use of intermetallics and starting products in the form of boron carbide (B₄C), boron (B) and carbon (C) confirms the occurrence of the reaction sintering during the synthesis, which makes it possible to achieve a density of the obtained composites at the level of 99.9%.

### Example 5

The following powders were prepared to obtain the composite: boron carbide B₄C, titanium silicide TiSi, carbon C in the form of P-803 technical carbon black (Tuymazy) and amorphous boron, which consisted of three phases: beta boron, boric acid and boron. Commercial boron carbide B₄C powder (Boron carbide B₄C GRADE HS by Höganäs) containing the following phases: B₁₃C₂ (99%) and graphite (1%) was used. To produce the TiSi powder, the process of self-developing high-temperature synthesis (SHS) was used, as described in the publication by S. Rzepa, L. Chlubny, T. Bucki, "The Ti - Si intermetallic phases synthesis by SHS method", METAL 2018-27th International Conference on Metallurgy and Materials, Conference Proceedings, 2018, p. 1699-1704, according to which the powders of Ti and Si were used in the molar ratio of 1:1. The mixture of powders was placed in a reactor with argon atmosphere under the overpressure of 1.5 atm. The SHS synthesis reaction was initiated locally by the heat released during current flow, through a graphite foil placed in the mixture of powders. The current intensity was 200 A, and the flow time was 1 minute. The produced titanium silicide TiSi₂, carbon C in the form of P-803 technical carbon black (Tuymazy) and amorphous boron were added to the boron carbide B₄C powder, in the molar ratio B₄C:TiSi:C:B of 1:2:3:1, and the whole mixture was then stirred in a rotary-vibrating mill in the isopropyl alcohol environment for 30 minutes, after which it was dried until the complete evaporation of the alcohol for 30 minutes. The obtained powders were preformed into disks having the diameter of 25 mm and the height of 20 mm and subjected to isostatic pressing under the pressure of 200 MPa. The achieved moulded pieces were subjected to the sintering process by the hot pressing method at the temperature of 1550°C, with the temperature increase of 10°C per minute, with the holding time of 30 minutes and under the pressure of 50 MPa. The TiB₂-TiC-SiC-TiSi composite containing titanium silicide TiSi, obtained by the method according to the invention, had the following phase composition: 65.0% by weight of TiB₂, 20% by weight of TiC, 14% by weight of SiC and 1% by weight of TiSi. The thus obtained moulded pieces of the composite having the composition as above in the form of the square having the side of 20 mm and the height of 6 mm were subjected to mechanical working.

The manufactured tool in the form of a multi-blade plate having the RNGN1204 geometry, intended for use in a cutting device, had high hardness of 35 (GPa) as measured by the Vickers method, wherein during the test it worked at the temperature of 400°C without the use of coolant in the form of water. The obtained cutting tools are characterized in that they can be regenerated by using the additive of boron and carbon to the composition and re-sintering the obtained shaped pieces, it is possible to use laser treatment under the protection of argon or by mechanical re-working the shaped pieces and removing damaged or deformed surfaces. Due to the high abrasion resistance of the obtained composites, the average friction factor can be determined at the level of 0.5. The use of intermetallics and starting products in the form of boron carbide (B₄C), boron (B) and carbon (C) confirms the occurrence of the reaction sintering during the synthesis, which makes it possible to achieve a density of the obtained composites at the level of 99.9%.

## Claims

1. A method of manufacturing a cutting tool from a highly refractory composite obtained from boron carbide and an intermetallic compound of the Ti-Si system, relaying on mixing starting powders in the form of boron carbide (B₄C), the intermetallic compound of the Ti-Si system, carbon C and boron B in the isopropyl alcohol environment, forming shaped pieces from the mixture of powders and subjecting them to sintering and mechanical working, **characterized in that** the highly refractory composite contains titanium silicide TiSi or TiSi₂ as the intermetallic compound of the Ti-Si system, in the molar ratio B₄C:TiSi/TiSi₂:C:B of 1:2:3:1, wherein the obtained TiB₂-TiC-SiC-TiSi composite containing titanium silicide TiSi has 60.0-65.0% by weight of TiB₂, 20-34% by weight of TiC, 5-14% by weight of SiC and 0.9-1.0% by weight of TiSi, while the obtained TiB₂-TiC-SiC-TiSi₂ composite containing titanium silicide TiSi₂ has 65.0-70.0% by weight of TiB₂, 9.2-10% by weight of TiC, 19.9-24.1% by weight of SiC and 0.9-1.0% by weight of TiSi₂, and the sintering process of the formed shaped pieces is carried out by spark plasma sintering method SPS under the protection of argon, at a temperature of 1350-1450°C, with a temperature increase of 200-300°C per minute, with a holding time of 1÷5 minutes and under the pressure of 50 MPa or by the hot pressing method at a temperature of 1500-1550°C, with the temperature increase of 10°C per minute, with the holding time of 30 minutes and under the pressure of 50 MPa.

## Patentansprüche

1. Verfahren zur Herstellung eines Schneidwerkzeugs aus einem hochfeuerfesten Verbundwerkstoff, der aus Borcarbid und einer intermetallischen Verbindung des Ti-Si-Systems erhalten wird, wobei ein Ausgangspulver in Form von Borcarbid (B₄C), der intermetallischen Verbindung des Ti-Si-Systems, Kohlenstoff C und Bor B in einer Isopropylalkohol-Umgebung gemischt wird, dann aus der Pulvermischung Formstücke geformt werden und diese gesintert und mechanisch bearbeitet werden, **dadurch gekennzeichnet, dass** der hochfeuerfeste Verbundwerkstoff Titansilicid TiSi oder TiSi₂ als intermetallische Verbindung des Ti-Si-Systems im Molverhältnis B₄C:TiSi/TiSi₂:C:B von 1:2:3:1 enthält, wobei der erhaltene TiB₂-TiC-SiC-TiSi-Verbundwerkstoff, der Titansilicid TiSi enthält, 60,0-65,0 Gew.-% TiB₂, 20-34 Gew.-% TiC, 5-14 Gew.-% SiC und 0,9-1,0 Gew.-% TiSi aufweist, während der erhaltene TiB₂-TiC-SiC-TiSi₂-Verbundstoff, der Titansilicid TiSi₂ enthält, 65,0-70,0 Gew.-% TiB₂, 9,2-10 Gew.-% TiC, 19,9-24,1 Gew.-% SiC und 0,9-1,0 Gew.-% TiSi₂ aufweist, und der Sinterprozess der gebildeten Formstücke durch das Funkenplasmasinterverfahren SPS unter Argonschutz bei einer Temperatur von 1350-1450°C, mit einer Temperatursteigerung von 200-300°C pro Minute, mit einer Haltezeit von 1÷5 Minuten und unter einem Druck von 50 MPa oder durch das Heißpressverfahren bei einer Temperatur von 1500-1550°C, mit einer Temperatursteigerung von 10°C pro Minute, mit einer Haltezeit von 30 Minuten und unter einem Druck von 50 MPa, durchgeführt wird.

## Revendications

1. Procédé de fabrication d'un outil coupant à partir d'un composite hautement réfractaire obtenu à partir de carbure de bore et d'un composé intermétallique du système Ti-Si, consistant à mélanger des poudres de départ sous forme de carbure de bore (B₄C), du composé intermétallique du système Ti-Si, de carbone C et de bore B dans un environnement d'alcool isopropylique, à former des pièces façonnées à partir du mélange de poudres et à les fritter et les soumettre à un traitement mécanique, **caractérisé en ce que** le composite hautement réfractaire contient du siliciure de titane TiSi ou TiSi₂ comme composé intermétallique du système Ti-Si, au rapport molaire B₄C:TiSi/TiSi₂:C:B de 1:2:3:1, le composite TiB₂-TiC-SiC-TiSi obtenu contenant du siliciure de titane TiSi ayant 60,0-65,0 % en poids de TiB₂, 20-34 % en poids de TiC, 5-14 % en poids de SiC et 0,9-1,0% en poids de TiSi, tandis que le composite TiB₂-TiC-SiC-TiSi₂ obtenu contenant du siliciure de titane TiSi₂ contient 65,0-70,0% en poids de TiB₂, 9,2-10% en poids de TiC, 19,9-24,1% en poids de SiC et 0,9-1,0% en poids de TiSi₂, et le processus de frittage des pièces façonnées formées est effectué par la méthode de frittage par plasma d'étincelles SPS sous la protection d'argon, à une température de 1350-1450°C, avec une augmentation de température de 200-300°C par minute, avec le temps de maintien de 1÷5 minutes et sous la pression de 50 MPa ou par la méthode de pressage à chaud à une température de 1500-1550°C, avec l'augmentation de température de 10°C par minute, avec le temps de maintien de 30 minutes et sous la pression de 50 MPa.
